# EUROPÄISCHE PATENTSCHRIFT

(11) **EP 0 354 598 B1**
(45) Veröffentlichungstag und Bekanntmachung des Hinweises auf die Patenterteilung: **19.01.1994**
(21) Anmeldenummer: 89118931.8
(22) Anmeldetag: 05.11.1986
(51) Int. Cl.: G01F 1/68, H01C 1/028

(54) **Sonde zur thermischen Massenstrommessung von Gasen und Flüssigkeiten**
Probe for the thermal mass flow measurement of gases and liquids
Sonde de mesure thermique du débit massique de gaz et de fluides

(30) Priorität: 04.12.1985 DE 3542788
(43) Veröffentlichungstag der Anmeldung: 14.02.1990
(62) Teilanmeldung aus: 86115313.8
(73) Patentinhaber: MANNESMANN Aktiengesellschaft, 40027 Düsseldorf (DE)
(72) Erfinder: Eiermann, Kurt, Dr. Dipl.- Phys., D-6102 Pfungstadt (DE); Göbel, Reiner, Dipl.-Ing., D-6450 Hanau 11 (DE); Gries, Peter, Dipl.-Ing., D-6071 Götzenhain (DE); Hohenstatt, Martin, Dipl.-Phys., D-6450 Hanau 9 (DE)
(74) Vertreter: Meissner, Peter E., Dipl.-Ing.

(56) Entgegenhaltungen:
- WO-A-87/05146
- DE-A- 2 914 275
- DE-A- 3 603 757
- FR-A- 2 475 724
- MEASUREMENTS & CONTROL, Issue 96, Dezember 1982, Seiten 155-159; W. Diehl: "Thin-film-PRTD - Platinum thin-film resistors as accurate and stable temperature sensors"

## Beschreibung

Die Erfindung bezieht sich auf eine Sonde zur thermischen Massenstrommessung von Gasen und Flüssigkeiten in Rohrleitungen, umfassend einen auf einem Trägerkörper angeordneten und mit elektrischen Anschlußdrähten versehenen Widerstand in Form einer Dünnfilmmetallschicht, die ihrerseits von einer (ersten) Schicht aus Glaskeramik abgedeckt ist.

In der Verfahrenstechnik wird für eine optimale Prozeßsteuerung wie auch für eine genaue Mengenbilanzierung der Massenstrom von am Prozeß beteiligten Gasen und Flüssigkeiten benötigt. Die Anforderungen an die entsprechenden Meßgeräte sind neben einer hohen Meßgenauigkeit über den gesamten Meßbereich und schneller Ansprechzeit vor allem einfache Handhabbarkeit und Unempfinglichkeit gegen chemisch aggressive Medien bei unter Umständen hohen Temperaturen.

Es sind für diesen Anwendungsbereich bereits zahlreiche Durchflußmeßeinrichtungen in Form von Meßblenden oder Venturidüsen mit entsprechenden Differenzdruckmeßgeräten vorgeschlagen worden. Bekannt sind auch Meßgeräte nach dem Schwebekörperprinzip und der Wirbelablösung. Diese Meßgeräte erlauben nur die Messung des Volumenstroms und erfordern für die Massenstrommessung eine Dichtekorrektur. Außerdem sind sie meist sehr störungsanfällig und nicht leicht handhabbar beim Einbau in Rohrleitungen.

Es sind auch thermische Massenstrommesser nach dem Prinzip des Hitzedraht- oder Heißfilmanemometers beschrieben worden, die z.B. auch im Kraftfahrzeugbereich zum Einsatz gelangen. Das Meßprinzip erlaubt die direkte Messung des Massenstroms und ermöglicht eine hohe Meßgenauigkeit über einen großen Meßbereich bei gleichzeitiger schneller Ansprechzeit. Ein solcher Massenstrommesser ist aus der Zeitschrift "Measurements and Control, Issue 96, Dezember 1982, Seiten 155-159" bekannt.

Ein Sonde mit dem Aufbau der eingangs genannten Art zeigt dann eine gewünschte Meßgenauigkeit und eine hinreichende Langzeitstabilität, wenn die Strömungsgeschwindigkeiten von weder aggresiven noch abrasiven Medien aufgenommen werden sollen. Andernfalls besteht die Gefahr, daß die erste vorzugsweise aus Glaskeramik bestehende dünne Schicht beschädigt und hierdurch bedingt das Widerstandsverhalten der Widerstandsschicht nicht reproduzierbar verändert wird.

Aufgabe der vorliegenden Erfindung ist es daher, eine Sonde der zuvor beschriebenen Art so weiterzubilden, daß die Strömungsgeschwindigkeiten auch von aggresiven und abrasiven Medien bestimmt werden können, ohne daß die Gefahr besteht, daß auch nach langem Gebrauch die Meßsonde fehlerhafte Signale liefert, daß also z.B. das Widerstandsverhalten der Dünnfilm-Metallschicht beeinflußt wird.

Die Aufgabe wird erfindungsgemäß im wesentlichen dadurch gelöst, daß zumindest im Bereich der Dünnfilmmetallschicht auf der ersten Schicht eine weitere (zweite) Schicht aus Keramik angeordnet ist, die als Schutzschicht dient. Hierdurch ist gewährleistet, daß auch beim Vorhandensein von mikroskopisch feinen Rissen und Poren in der aus Glaskeramik bestehenden ersten Schicht die Widerstandsschicht unbeeinflußt bleibt. Es ergibt sich folglich eine Sandwich-Struktur, die es ermöglicht, daß die Sonde bei unveränderter Meßgenauigkeit auch aggresiven und abrasiven Medien ausgesetzt werden kann . Hierdurch erhöht sich der Einsatzbereich entsprechender Dünnschichtanemometer.

In Ausgestaltung ist vorgesehen, daß die zweite Schicht mit der ersten Schicht über ein hochschmelzendes Glaslot verbunden ist. Hierdurch ergibt sich der Vorteil, daß eine sichere Verbindung zwischen der ersten und zweiten Schicht gegeben ist. wobei das Glaslot selbst gegenüber der Widerstandsschicht durch die erste Schicht chemisch getrennt wird.

Nach einem weiteren Vorschlag ist vorgesehen, daß der Ausdehnungskoeffizient der ersten Schicht dem des Trägerkörpers angepaßt ist. Auch diese Maßnahme stellt sicher, daß die Sonde bei unterschiedlichsten Temperaturen eine hohe Funktionstüchtigkeit bietet.

Vorteilhafterweise wird die Sonde, die eine Quaderform in Art einer quasi rechteckigen Platte besitzt, an einer der kleineren Schmalseiten an einer elektrisch isolierenden Zwei- oder Mehrfachkapillaren befestigt, die die Anschlußdrähte für den Dünnfilmwiderstand aufnimmt. Dabei ist vorzugsweise die Sonde in einem Schlitz auf einer Stirnseite der Mehrfachkapillaren eingesetzt und mit einem Glaslot befestigt.

Insbesondere zeichnet sich die erfindungsgemäße Sonde dadurch aus, daß der Trägerkörper aus Keramik besteht, daß die aus Glaskeramik bestehende erste Schicht zumindest im Bereich der Dünnfilmmetallschicht über eine Glaslot mit einer zweiten aus Keramik bestehenden Schicht als Schutzschicht verbunden ist, wobei die eine Quaderform aufweisende Sonde bereichsweise in einem Schlitz einer als Halterung dienenden, aus Keramik bestehenden, die elektrischen Anschlüsse aufnehmenden Mehrfachkapillaren eingebracht ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:

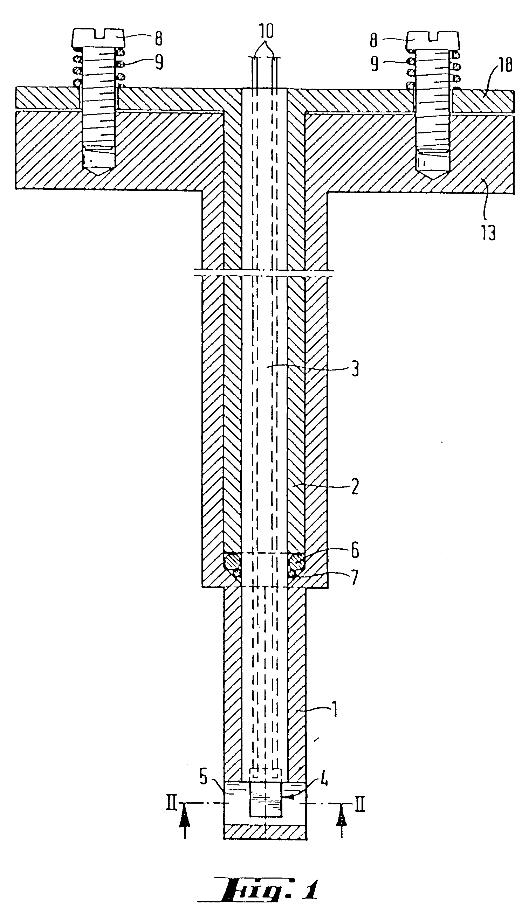

- Fig. 1: einen Längsschnitt durch einen Meßfühler mit Schutzrohr, Sonde und Anschlußleitung,

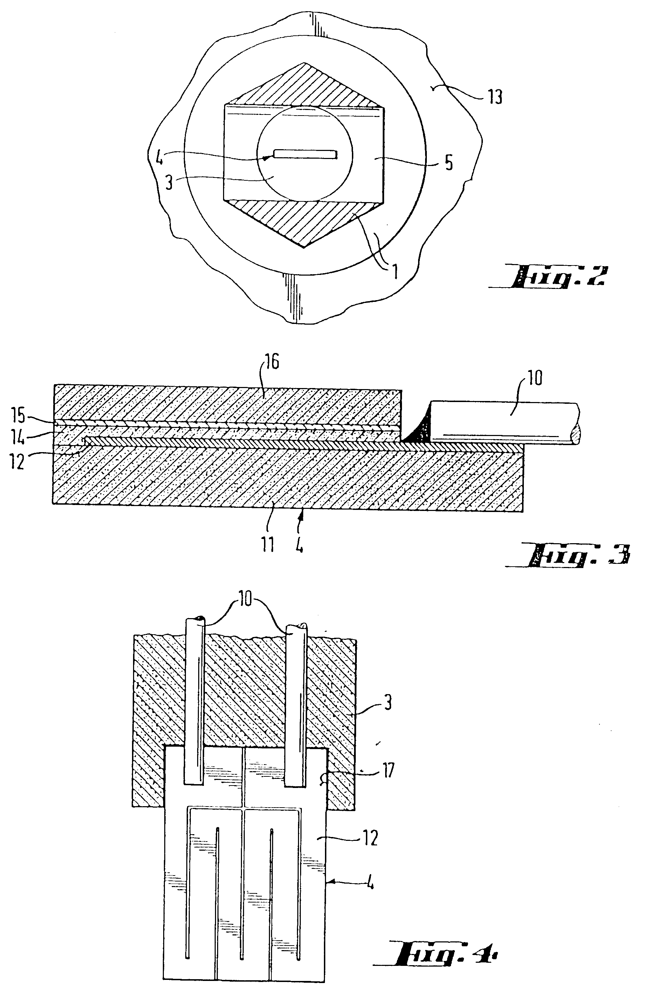

- Fig. 2: eine Schnittdarstellung entlang der Linie II-II in Fig. 1,
- Fig. 3: eine Schnittdarstellung der Sonde und
- Fig. 4: eine Detaildarstellung der in einer Mehrfachkapillaren befestigten Sonde.

Ein Meßfühler für einen Meßwiderstand -wie für einen Referenzwiderstand- umfaßt ein Schutzrohr (1), ein Einsteckrohr (2) und eine Mehrfachkapillare (3), an der eine nachstehend näher zu beschreibende Sonde (4) befestigt ist.

Das Schutzrohr (1) ist ein unten geschlossenes Rohr, das in seinem unteren Teil einen sechseckigen Querschnitt und im oberen Teil einen runden Querschnitt aufweist. Innerhalb des sechseckigen Rohrquerschnittes ist eine transversale Durchbohrung (5) angebracht, die senkrecht zu zwei zueinander parallel liegenden Seitenflächen des sechseckigen Profils verläuft. Der Meßfühler ist so in die Rohrleitung eingebaut, daß die Durchbohrung (5) parallel zur Strömungsrichtung des zu messenden Mediums verläuft.

Das Verhältnis von Länge zu Durchmesser der Durchbohrung (5) ist mindestens 1,5. Der Innendurchmesser von Schutzrohr (1) ist im unteren Teil kleiner als im oberen Teil und bildet an der übergangsstelle eine Fase zum Anpressen einer Dichtung (6). Am oberen Teil des Schutzrohres (1) ist ein Flansch (13) angebracht, an dem das Einsteckrohr (2) ebenfalls mit einem Flansch (18) befestigt ist.

Das Einsteckrohr (2) ist ein unten offenes Rohr, dessen Außendurchmesser und Länge so bemessen sind, daß es in den oberen Teil des Schutzrohres (1) mit rundem Profil eingesetzt werden kann. Der Innendurchmesser ist gleich dem des Schutzrohres (1) im unteren Bereich mit sechseckigem Profil.

Im Einsteckrohr (2) ist die Mehrfachkapillare (3) aus Keramik befestigt. Die Länge der Mehrfachkapillare (3) ist so bemessen, daß sie vom Einsteckrohr (2) in den unteren Teil des, Schutzrohres (1) mit sechseckigem Profil ragt und bis an den oberen Rand der transversalen Durchbohrung (5) reicht. An diesem Ende der Mehrfachkapillare (3) ist die Sonde (4) befestigt, die die Form einer dünnen quaderförmigen Platte hat. Diese ist an einer der kleineren Schmalseiten an der Mehrfachkapillare (3) befestigt und so ausgerichtet, daß die Oberfläche eines Dünnfilmwiderstands (12), den die Sonde (4) umfaßt, parallel zur Achse der Durchbohrung (5) verläuft. Die Mehrfachkapillare (3) nimmt zwei Anschlußdrähte (10) des Dünnfilmwiderstands (12) auf.

Die Abdichtung zwischen Schutzrohr (1) und Einsteckrohr (2) einerseits und Schutzrohr (2) und Mehrfachkapillare (3) andererseits wird durch zwei Dichtringe (6) und (7) aus wärmebeständigem und korrosionsfestem Material hergestellt. Sie sitzen passend auf der Mehrfachkapillare (3) am Ende des Einsteckrohrs (2) und werden vom Einsteckrohr (2) gegen die Fase im Innern des Schutzrohrs (1) gepreßt. Um auch bei eventuellem Fließen des Dichtmaterials immer den erforderlichen Anpreßdruck gewährleisten zu können, ist die Verschraubung (8) zwischen Schutzrohrflansch (13) und Einsteckrohrflansch (18) mit einer Feder (9) versehen.

Der temperaturabhängige Dünnfilmwiderstand (12), der durch eine elektronische Regelschaltung in bekannter Weise so mit Strom versorgt wird, daß seine Temperatur relativ zur Medientemperatur konstant gehalten wird, wird mit Ausnahme einer Schmalseite von diesem Medium umspült. Dies hat ein schnelles Ansprechen bei Änderung des Massenstroms oder der Medientemperatur zur Folge und ergibt eine große Empfindlichkeit infolge der großen Fläche, die am Wärmeaustausch mit dem Medium beteiligt ist. Da der Dünnfilmwiderstand (12) mit seiner Oberfläche parallel zur Strömungsrichtung ausgerichtet ist, ist ein Verschmutzungseinfluß nur auf der schmalen Anströmkante zu erwarten und deshalb vernachlässigbar.

Das Anbringen der Sonde (4) und damit des Dünnfilmwiderstandes (12) in der Durchbohrung (5) hat mehrere Vorteile. Neben dem Schutz gegen mechanische Einwirkungen stellt die Durchbohrung (5) einen definierten Strömungskanal dar, der überraschenderweise die Anordnung relativ unempfindlich gegen Störungen im Strömungsprofil macht. Ebenso unerwartet sorgt er dafür, daß unvermeidliche Einbauungenauigkeiten, die Parallelität von Durchbohrung (5) und Strömungsrichtung betreffend, nur unbedeutende Änderungen im Meßergebnis verursachen. Für beides ist es wesentlich, daß das Verhältnis von Länge zu Durchmesser der Durchbohrung (5) mindestens 1,5 vorzugsweise mindestens 2 ist. In Versuchen mit Dünnfilmwiderständen, die nicht in einer solchen Durchbohrung angebracht waren, ergaben kleinste Winkeländerungen bezüglich der Parallelität bereits deutliche Meßwertabweichungen.

Figur 3 zeigt den Aufbau der Sonde (4) im Detail. Auf einer dünnen Platte (11) aus elektrisch isolierendem, gut wärmeleitendem Material, vorzugsweise Keramik, ist die Dünnfilmmetallschicht (12), vorzugsweise Platin oder Iridium, aufgebracht. Dies kann nach bekannten Verfahren, z.B. durch Hochfrequenz-Sputtertechnik erfolgen. Die Dünnfilmschicht (12) ist strukturiert, wobei den größten Teil der Fläche die eigentliche Widerstandsschicht (12) einnimmt. Am Endbereich der Dünnfilmschicht (12) sind zwei Anschlußdrähte (10) kontaktiert. Die Dünnfilmschicht (12) ist mit einer dünnen Schicht (14) aus Glaskeramik abgedeckt, deren Ausdehnungskoeffizient dem der Keramik der Platte (11) angepaßt ist und die auch bei Temperaturen bis 600°C keine Änderungen in der Widerstandsschicht (12), z.B. durch Diffusion von Ionen hervorruft.

In der Glaskeramik treten jedoch häufig mikroskopisch feine Risse und Poren auf. Um die Widerstandsschicht (11) auch in diesem Fall zu schützen, wird mittels einer hauchdünnen Schicht (15) aus einem hochschmelzendem Glaslot eine dünne Platte (16) aus Keramik auf der Glaskeramikschicht (14) befestigt.

Die Mehrlochkapillare (3) weist an ihrer Stirnfläche einen Schlitz (17) auf, der so dimensioniert ist, daß er den Anschlußteil des Dünnfilmwiderstandes (4) mit den Anschlußdrähten (10) aufnehmen kann. Der Dünnfilmwiderstand (4) wird in den Schlitz (17) der Mehrfachkapillare (3) eingeführt, wobei die Anschlußdrähte (10) von der Mehrfachkapillare (3) aufgenommen werden. Die Befestigung erfolgt durch ein hochschmelzendes Glaslot mit passendem Ausdehnungskoeffizient, mit dem der Schlitz ausgefüllt wird. Mit dieser Halterung ist einmal eine mechanisch stabile Verbindung von Dünnfilmwiderstand (4) und Mehrfachkapillare (3) gegeben. Die relativ geringe Wärmeleitfähigkeit des verwendeten Glaslots bewirkt außerdem, daß der Wärmefluß vom Dünnfilmwiderstand (4) in die Mehrfachkapillare (3) begrenzt wird und ein schnelles Ansprechen bei Durchflußänderungen gewährleistet ist.

Die hier beschriebene Ausführung eines Meßwiderstandes gilt auf die gleiche Weise auch für den entsprechenden Referenzwiderstand.

## Patentansprüche

1. Sonde (4) zur thermischen Massenstrommessung von Gasen und Flüssigkeiten in Rohrleitungen, umfassend einen auf einen Trägerkörper (11) angeordneten mit elektrischen Anschlußdrähten (10) versehenen Widerstand (12) in Form einer Dünnfilmmetallschicht, die ihrerseits von einer ersten Schicht (14) aus Glaskeramik abgedeckt ist,
**dadurch gekennzeichnet,**
daß zumindest im Bereich der Dünnfilmmetallschicht (12) auf der ersten Schicht (14) eine weitere zweite Schicht (16) aus Keramik angeordnet ist.

2. Sonde nach Anspruch 1,
**dadurch gekennzeichnet,**
daß die zweite Schicht (16) mit der ersten Schicht (14) über ein hochschmelzendes Glaslot (15) verbunden ist.

3. Sonde nach Anspruch 1,
**dadurch gekennzeichnet,**
daß der Ausdehnungskoeffizient der ersten Schicht (14) dem des Trägerkörpers (11) angepaßt ist.

4. Sonde nach zumindest einem der vorhergehenden Ansprüche,
**dadurch gekennzeichnet,**
daß die aus Glaskeramik bestehende erste Schicht (14) zumindest einen Stirnbereich des in Draufsicht rechteckigen Dünnfilmwiderstands (12) abdeckt.

5. Sonde nach zumindest einem der vorhergehenden Ansprüche,
**dadurch gekennzeichnet,**
daß die von der Dünnfilmmetallschicht (12) ausgehenden Anschlußdrähte (10) in einer aus Keramik bestehenden Mehrfachkapillaren (3) verlaufen, die stirnseitig einen Schlitz (17) aufweist, dessen Querschnitt dem der Sonde (4) angepaßt ist und in dem die Sonde mit ihrer die Anschlußdrähte aufweisenden kleineren Schmalseite eingesteckt ist.

6. Sonde (4) zur thermischen Massenstrommessung von Gasen und Flüssigkeiten in Rohrleitungen, umfassend einen auf einen Trägerkörper (11) angeordneten mit elektrischen Anschlußdrähten (10) versehenen Widerstand (12) in Form einer Dünnfilmmetallschicht, die ihrerseits von einer ersten Schicht (14) aus Glaskeramik abgedeckt ist,
**dadurch gekennzeichnet,**
daß der Trägerkörper (11) aus Keramik besteht, daß die aus Glaskeramik bestehende erste Schicht (14) zumindest im Bereich der Dünnfilmmetallschicht (12) über ein Glaslot (15) mit einer zweiten aus Keramik bestehenden Schicht (16) verbunden ist, wobei die eine Quaderform aufweisende Sonde (4) bereichsweise in einem Schlitz einer als Halterung dienenden, die elektrischen Anschlüsse (10) aufnehmenden Mehrfachkapillaren (3) eingebracht ist.

## Claims

1. A probe (4) for the thermal mass flow measurement of gases and liquids in pipes, comprising a resistance (12) in the form of a thin-film metal layer which is provided with electrical connecting wires (10) and is located on a carrier body (11), which layer itself is covered by a first layer (14) of glass ceramic, characterised in that a further second layer (16) of ceramic is located on the first layer (14) at least in the region of the thin-film metal layer (12).

2. A probe according to Claim 1, characterised in that the second layer (16) is joined to the first layer (14) by a high-melting glass solder (15).

3. A probe according to Claim 1, characterised in that the coefficient of expansion of the first layer (14) is matched to that of the carrier body (11).

4. A probe according to at least one of the preceding Claims, characterised in that the first layer (14) which is made of glass ceramic covers at least an end region of the thin-film resistance (12), which is rectangular when viewed from above.

5. A probe according to at least one of the preceding Claims, characterised in that the connecting wires (10) which start from the thin-film metal layer (12) run in a multiple capillary tube (3) made of ceramic, which has a slot (17) on its end face, the cross-section of which slot is matched to that of the probe (4) and in which the probe is inserted by its smaller narrow side which bears the connecting wires.

6. A probe (4) for the thermal mass flow measurement of gases and liquids in pipes, comprising a resistance (12) in the form of a thin-film metal layer which is provided with electrical connecting wires (10) and is located on a carrier body (11), which layer itself is covered by a first layer (14) of glass ceramic, characterised in that the carrier body (11) is made of ceramic, that the first layer (14) which is made of glass ceramic is joined to a second layer (16) made of ceramic, at least in the region of the thin-film metal layer (12), by means of a glass solder (15), the probe (4), which has a cuboid shape, being introduced region-wise in a slot of a multiple capillary tube (3) which serves as a holder and which receives the electrical connections (10).

## Revendications

1. Sonde (4) pour la mesure thermique du débit massique de gaz et de liquides dans des conduits, comportant une résistance (12), agencée sur un corps de support (11) et munie de fils de raccordement électriques (10), sous forme d'une couche métallique constituée d'un film mince, qui, de son côté, est recouverte par une première couche (14) en vitrocéramique, caractérisée en ce qu'une deuxième couche (16) en céramique est agencée, au moins dans la zone de la couche métallique (12) constituée d'un film mince, sur la première couche (14).

2. Sonde selon la revendication 1,
caractérisée en ce que la deuxième couche (16) est reliée à la première couche (14) par l'intermédiaire d'une soudure de verre (15) à point de fusion élevé.

3. Sonde selon la revendication 1,
caractérisée en ce que le coefficient de dilatation de la première couche (14) est adapté à celui du corps de support (11).

4. Sonde selon au moins une des revendications précédentes,
caractérisée en ce que la première couche (14) constituée de vitrocéramique recouvre au moins une zone frontale de la résistance (12), constituée d'un film mince, rectangulaire en vue de dessus.

5. Sonde selon au moins une des revendications précédentes,
caractérisée en ce que les fils de raccordement (10) partant de la couche métallique (12) constituée d'un film mince s'étendent dans un capillaire multiple (3) constitué de céramique, qui, frontalement, présente une fente (17) dont la section transversale est adaptée à celle de la sonde (4) et dans laquelle la sonde est enfichée par son côté étroit plus petit présentant les fils de raccordement.

6. Sonde (4) pour la mesure thermique du débit massique de gaz et de liquides dans des conduits, comportant une résistance (12), agencée sur un corps de support (11) et munie de fils de raccordement électriques (10), sous forme d'une couche métallique constituée d'un film mince, qui, de son côté, est recouverte par une première couche (14) en vitrocéramique,
caractérisée en ce que le corps de support (11) est constitué de céramique, en ce que la première couche (14) constituée de vitrocéramique est reliée, au moins dans la zone de la couche métallique (12) constituée d'un film mince, par l'intermédiaire d'une soudure de verre (15), à une deuxième couche (16) constituée de céramique, la sonde (4) présentant une forme quadratique étant agencée, par zone, dans une fente d'un capillaire multiple (3) servant de maintien et recevant les raccords électriques (10).
